# EUROPEAN PATENT APPLICATION

(11) **EP 2 161 122 A1**
(43) Date of publication of application: **10.03.2010**
(21) Application number: 09168342.5
(22) Date of filing: 20.08.2009
(51) Int. Cl.: B32B 13/08, C03C 25/10, C03C 25/24, E04C 2/04

(54) **Wucs fibers having improved flowing and dispersing properties**

(30) Priority: 29.08.2008 US 201455
(71) Applicant: OCV Intellectual Capital, LLC, Toledo, OH 43659 (US)
(72) Inventor: Lee, Jerry H.C., Columbus, OH 43235 (US); Green, John, Alexandria, OH 43001 (US); Schweiger, Scott W., Newark, OH 43055 (US); Green, Dalvin, Charlotte, NC 28269 (US)
(74) Representative: Boura, Olivier

(57) **Abstract**

A sizing composition including one or more primary lubricants, at least one secondary lubricant, and at least one coupling agent is provided. The primary lubricant is a fatty amide lubricant that is the condensation product of a saturated fatty acid having at least 16 carbon atoms and a polyamine. Additionally, the primary lubricant acts both as a lubricant and as a cationic surfactant in the size composition when it is neutralized with a weak acid to assist in dispersing the fibers in a gypsum slurry. The secondary lubricant is polyamide or a polyvinyl amine, and acts as a film forming agent in the fiberizing process to protect the glass fibers from interfilament abrasion. The sizing composition provides improved fiber feeding, fiber flow, and fiber dispersion in a gypsum matrix or slurry. The weight ratio by dry solids of primary to secondary lubricant in the size composition is at least 5:1.

## Description

### Technical Field

The present invention relates generally to a sizing composition for wet use chopped strand glass fibers, and more particularly, to a sizing composition that contains (1) a primary fatty amide lubricant that is condensed from a long chain fatty acid and a polyamine and (2) a secondary lubricant that is a polyamide or a polyvinyl amine in a ratio by dry solids greater than or equal to 5:1. A gypsum board formed from a reinforcing fiber material sized with the sizing composition is also provided.

**Background Art**

Wall boards formed of a gypsum core sandwiched between facing layers are commonly used in the construction industry as internal walls and ceilings for both residential and commercial buildings. Facing materials advantageously contribute flexibility, nail pull resistance, and impact strength to the materials forming the gypsum core. In addition, the facing material can provide a fairly durable surface and/or other desirable properties (*e.g*., a decorative surface) to the gypsum board. The gypsum core typically contains gypsum, optionally some wet chopped glass fibers, water resistant chemicals, binders, accelerants, and low-density fillers. It is known in the art to form gypsum boards by providing a continuous layer of a facing material, such as a fibrous veil, and depositing a gypsum slurry onto the bottom surface of the facing material. A second continuous layer of facing material is then applied to the top surface of the gypsum slurry. The sandwiched gypsum slurry is then sized for thickness and dried to harden the gypsum core and form a gypsum board. Next, the gypsum board may be cut to a predetermined length for end-use.

Glass fibers are commonly used in the production of gypsum wall boards to improve the tensile and tear strength of the products. The fibers may be employed in many forms, including individual fibers, strands containing plural fibers, and rovings. These fiber products, in turn, may be used in discrete form and incorporated into a gypsum matrix or they may be assembled into woven or non-woven fabrics or mats and utilized as the facing material. For example, glass fibers may be formed by drawing molten glass into filaments through a bushing or orifice plate and applying an aqueous sizing composition containing lubricants, coupling agents, and film-forming binder resins to the filaments. The sizing composition provides protection to the fibers from interfilament abrasion and promotes compatibility between the glass fibers and the matrix in which the glass fibers are to be used. After the sizing composition is applied, the wet fibers may be gathered into one or more strands, chopped, and collected as wet chopped fiber strands.

These wet chopped fibers may then be deposited into a gypsum slurry to add mechanical strength to the formed gypsum board. However, conventional glass fibers do not flow or disperse well in the gypsum slurry and, as a result, gypsum boards are formed that have an uneven distribution of glass fibers within the gypsum board. Such an uneven distribution of fibers can cause weakness and/or failure of the gypsum board. Additionally, conventionally sized glass fibers do not feed well in conventional feeding apparatuses, which, in turn, forces manufacturers to employ a high or increased feeding rate in order to achieve the minimum glass amount that is required for gypsum boards. Employing a high feed rate causes an unnecessarily high amount of glass fibers to be present in the final gypsum board.

Accordingly, there exists a need in the art for a gypsum board that contains a substantially even distribution of glass fibers and which can be manufactured at a decreased feeding rate compared to conventional processes.

**Disclosure of Invention**

It is an object of the present invention to provide a sizing composition for reinforcing fibers that includes a primary amide lubricant, a secondary lubricant, and at least one silane coupling agent. The primary lubricant in the size composition is a fatty amide lubricant that is the condensation product of a saturated fatty acid having at least 16 carbon atoms and a polyamine. In preferred embodiments, the fatty acids to use to make the primary fatty amide lubricants are saturated fatty acids having a straight alkyl chain and a water solubility less than about 0.003 g/liter (in water), such as stearic acid. The secondary lubricant may be an amide or a polyvinyl amine. The primary lubricant acts both as a lubricant and as a cationic surfactant in the size composition when it is neutralized with a weak acid such as acetic acid to assist in dispersing the fibers in the gypsum slurry. The secondary lubricant acts as a film forming agent in the fiberizing process to protect the glass fibers from interfilament abrasion. Suitable polyamides for use as the secondary lubricant include, but are not limited to, condensation reaction products from fatty acids having 10 or fewer carbons atoms or diacids with polyamines. The primary lubricant and the secondary lubricant are present in the size composition in a ratio of greater than or equal to 5:1. The silane coupling agent is preferably an amino or diamino silane coupling agent. Viscosity modifiers, pH adjusters, biocides, and coalescents such as glycols and glycol ethers may also be included in the sizing composition. The reinforcing fiber material may be one or more strands of glass, particularly wet use chopped strand glass fibers, natural fibers, carbon fibers, or one or more synthetic polymers. In at least one exemplary embodiment, glass fibers are sized with the sizing composition and packaged as wet use chopped strand glass that is subsequently used to form a gypsum board.

It is another object of the present invention to provide a reinforcement fiber sized with a sizing composition that contains a primary amide lubricant, a secondary lubricant, and a silane coupling agent as described above.

It is a further object of the present invention to provide a gypsum board that is formed of a plurality of glass fibers sized with a sizing composition that contains a primary amide lubricant, a secondary lubricant, and a silane coupling agent as described above.

It is an advantage of the present invention that the sizing composition provides improved flowability with a reduction in the amount of energy required to feed the fibers.

It is another advantage of the present invention that more consistent flow rates of the fibers are achieved when the fibers are sized with the inventive sizing composition.

It is a further advantage of the present invention that fibers sized with the inventive sizing composition have improved dispersion in the gypsum slurry.

It is yet another advantage of the present invention that fibers sized with the inventive sizing composition permits a lower feed rate while still achieving the minimum required glass content in the formed gypsum board.

It is also an advantage of the present invention that the wet used chopped strand glass fibers (WUCS) are a low cost reinforcement that provides impact resistance, dimensional stability, and improved mechanical properties to the gypsum board. In addition, with WUCS, the gypsum board is compatible with fastening systems such as nails, staples, and screws utilized in construction processes and the occurrence of cracking and other mechanical failures is reduced.

It is a feature of the present invention that the sizing composition is free of polyvinyl alcohol.

It is another feature of the present invention that the primary lubricant and the secondary lubricant are present in the size composition in a ratio by dry solids of greater than or equal to 5:1.

It is a yet another feature of the present invention that improved fiber dispersion and improved flowability of glass fibers in a gypsum matrix is improved when a ratio of 5:1 of the primary lubricant to the secondary lubricant is utilized in the inventive sizing composition.

It is a further feature of the present invention that size composition present on the glass fibers permits the fibers to substantially evenly disperse in the gypsum slurry and in the formed gypsum board.

The foregoing and other objects, features, and advantages of the invention will appear more fully hereinafter from a consideration of the detailed description that follows.

**Brief Description of Figures in the Drawings**

The advantages of this invention will be apparent upon consideration of the following detailed disclosure of the invention, especially when taken in conjunction with the accompanying drawings wherein:

FIG. 1 is a schematic illustration of a processing line for forming a gypsum board according to an exemplary embodiment of the present invention;

FIG. 2 is a schematic illustration of a conventional gypsum board depicting an uneven distribution of glass fibers within the board;

FIG. 3 is a schematic illustration of a gypsum board according to at least one exemplary embodiment of the present invention depicting a substantially even distribution of glass fibers within the board; and

FIG. 4 is a graphical illustration depicting the reduction in feeding rate of glass fibers caused by the inventive sizing composition.

**Best Mode for Carrying Out the Invention**

Unless defined otherwise, all technical and scientific terms used herein have the same meaning as commonly understood by one of ordinary skill in the art to which the invention belongs. Although any methods and materials similar or equivalent to those described herein can be used in the practice or testing of the present invention, the preferred methods and materials are described herein. It is to be noted that the phrases "size composition", "sizing formulation", "sizing composition", and "size" are used interchangeably herein.

The present invention relates to sizing compositions for wet use chopped strand glass fibers. The sizing composition includes one or more primary lubricants, at least one secondary lubricant, and at least one coupling agent. The sizing composition provides improved fiber feeding, fiber flow, and fiber dispersion in a gypsum matrix or slurry. The weight ratio by dry solids of primary to secondary lubricant in the size composition is at least 5:1. In addition, the size is free of polyvinyl alcohol (PVA).

The primary lubricant in the size composition is a fatty amide lubricant that is the condensation product of a saturated fatty acid having at least 16 carbon atoms and a polyamine. Non-exclusive examples of saturated fatty acids that contain at least 16 carbons for use in forming the primary lubricant include, but are not limited to, palmitic acid, margaric acid, stearic acid, arachidic acid, and mixtures thereof. In addition, vegetable-based fatty acids containing at least 16 carbon atoms such as, but not limited to, Agri-Pure 130 (Cargill, Inc.), Agri-Pure 150 (Cargill, Inc.), Edenor UKD 5010 (Cognis), Edenor UKD 5020 (Cognis), and Edenor C18 98-100 (Cognis) may be used to synthesize the primary fatty amide lubricant. In preferred embodiments, the fatty acids to use to make the primary fatty amide lubricants are saturated fatty acids with a straight alkyl chain having a water solubility less than about 0.003 g/liter in water, such as stearic acid. The primary lubricant acts both as a lubricant and as a cationic surfactant in the size composition when it is neutralized with a weak acid ( *e.g*., acetic acid, citric acid, sulfuric acid, or phosphoric acid) to assist in dispersing the fibers in the gypsum slurry.

The polyamine is a low to high molecular weight polymer in which amine linkages or amine groups occur along the molecular chain. Polyamines suitable for forming the primary fatty amide lubricant include tertiary amines having a low molecular weight, such as, for example, where the alkyl groups attached to the amine nitrogen atom have from 1 to 6 carbon atoms. As used herein, the terms "low molecular weight" is meant to indicate a molecular weight from about 50 to about 200 and "high molecular weight" is meant to indicate a molecular weight in the range from about 400 to about 2000. Preferred polyamines for use in the inventive sizing composition have a molecular weight from about 100-800. Molecular weight is defined herein as weight average molecular weight. Non-exclusive examples of polyamines that may be used to form the fatty amide lubricant include tetraethylenepentamine (TEPA), diethylenetriamine (DETA), tetraethylenetriamine (TETA), ethylene diamine, diethylene triamine, triethylene tetramine, and pentaethylene hexamine. In preferred embodiments, the polyamine is tetraethylenepentamine (TEPA).

Lubesize K-12 (Alpha/Owens Corning, LLC), Cationic-X Version C (Eastman Chemicals), and Stanex 8145 (Cognis Corporation) are examples of primary lubricants suitable for use in the present invention. The primary lubricant may be present in the size in an amount from 50-90% by weight of the dry solids, and more preferably in an amount of from 60-80 % by weight of the dry solids.

In addition, the size composition includes at least one secondary lubricant that is either a polyamide or a polyvinyl amine. The secondary lubricant acts as a film forming agent in the fiberizing process to protect the glass fibers from interfilament abrasion. Suitable polyamides for use as the secondary lubricant include, but are not limited to condensation reaction products from fatty acids having 10 or fewer carbons atoms or diacids with polyamines. Examples of fatty acids having 10 or less carbon atoms include, but are not limited to, caprylic acid and pelargonic acid. Polyamines used to form the secondary lubricant include tetraethylenepentamine (TEPA), diethylenetriamine (DETA), tetraethylenetriamine (TETA), ethylene diamine, diethylene triamine, triethylene tetramine, and pentaethylene hexamine. Examples of a condensation reaction product from a fatty acid having 10 carbons or less and a polyamine include Emery 6717 and Emery 6760, which are both commercially available from Cognis. The secondary lubricant can alternatively be prepared from a diacid, such as adipic acid, and a polyamine. Examples of such amide lubricants include GP-2925 resin, which is commercially available form Georgia-Pacific Resins, Inc. and Lupamin 9095, which is commercially available from BASF Corporation. The preferred secondary amide lubricant is a condensation reaction product from a diacid and a polyamine. The secondary lubricant may be present in the size in an amount from 10-50 % by weight of the dry solids, and more preferably in an amount of from 20-40 % by weight of the dry solids.

The primary lubricant and the secondary lubricant are present in the size composition in a ratio by dry solids of greater than or equal to 5:1. It has been surprisingly discovered that improved fiber dispersion and improved flowability of the glass fibers in a gypsum matrix is improved when a ratio of 5:1 of the primary lubricant to the secondary lubricant is utilized in the inventive sizing composition.

The sizing composition also contains one or more coupling agents in a partially or a fully hydrolyzed state or in a non-hydrolyzed state. The silane coupling agents may also be in monomeric, oligomeric or polymeric form prior to, during, or after their use. Preferably, at least one of the coupling agents is a silane coupling agent. Silane coupling agents function to enhance the adhesion of film forming polymers to the glass fibers and to reduce the level of fuzz, or broken fiber filaments, during subsequent processing. Examples of silane coupling agents which may be used in the size composition may be characterized by the functional groups amino, epoxy, vinyl, methacryloxy, ureido, isocyanato, and azamido.

Examples of suitable silane coupling agents for use in the size composition include, but are not limited to, γ-aminopropyltriethoxysilane (A-1100), n-trimethoxy-silyl-propyl-ethylene-diamine (A-1120), γ-glycidoxypropyltrimethoxysilane (A-187), γ-methacryloxypropyltrimethoxysilane (A-174), n-β-aminoethyl-γ-aminopropyltrimethoxysilane (A-1120), methyl-trichlorosilane (A-154), methyl-trimethoxysilane (A-163), γ-mercaptopropyl-trimethoxy-silane (A-189), γ-chloropropyl-trimethoxy-silane (A-143), vinyl-triethoxy-silane (A-151), vinyl-tris-(2-methoxyethoxy)silane (A-2171), vinyl-triacetoxy silane (A-188), octyltriethoxysilane (A-137), methyltriethoxysilane (A-162), methyltrimethoxysilane (A-1630), Silquest RC-1 vinyl silane, and Silquest RC-2 sulfur silane. All of the silane couplings agents listed herein are Silquest products available from GE Silicones. Preferably, the size composition contains an aminosilane or diaminosilane coupling agent. The coupling agent or agents may be present in the sizing composition in an amount of from 10-20% by weight of the dry solids, and preferably, in an amount of from 5-10% by weight of the dry solids.

Optionally, the sizing composition may contain a viscosity modifier such as a polyacrylamide, a hydroxyethyl cellulose, or a polyamine viscosity modifier. Specific examples of viscosity modifiers include Nalco 7530 (ONDEO Nalco), 01 PF067 (ONDEO Nalco), Superfloc C-507 (Cytec Industries, Inc.), Superfloc MX 40 (Cytec Industries, Inc.), Superfloc MX 80 (Cytec Industries, Inc.), and Superfloc SD-2065 (Cytec Industries, Inc.). The viscosity modifier acts as a secondary dispersant in the size composition. The viscosity modifier may be present in the sizing composition in an amount of from 0-5% by weight of the dry solids.

In addition, the size composition may optionally include a pH adjusting agent such as acetic acid, citric acid, sulfuric acid, or phosphoric acid in an amount sufficient to adjust the pH to a desired level. The pH may be adjusted to facilitate the compatibility of the ingredients of the size composition. Preferably, the sizing composition has a pH from 5.0-9.0, and more preferably a pH from 6.0-8.0.

Further, the size may optionally contain conventional additives such as dyes, oils, fillers, thermal stabilizers, anti-foaming agents, anti-oxidants, dust suppression agents, wetting agents, antimicrobial agents, fungicides, biocides and/or other conventional adjuvants. The amount of additives present in the size composition is preferably not in excess of approximately 2.0% by weight of the dry solids.

The balance of the size composition is composed of water. In particular, water may be added to dilute the aqueous sizing composition to a viscosity that is suitable for its application to glass fibers and to achieve the desired solids content. The sizing composition may contain up to approximately 99.5% water.

A preferred sizing composition according to the present invention is set forth in Table 1.

**Table 1**

| **Component of Size Composition** | **% by Weight of Dry Solids** |
|---|---|
| Primary Amide Lubricant | 50-90 |
| Secondary Lubricant | 10-50 |
| Silane Coupling Agent | 10-20 |
| Viscosity Modifier | 0-5 |

It is to be appreciated that the size composition is free of polyvinyl alcohol (PVA). The presence of polyvinyl alcohol in a size composition tends to reduce the storage capability of a product containing wet use chopped strand glass fibers. More specifically, the polyvinyl alcohol forms a less water-soluble film or crust on the WUCS fibers during the storage period. This crust causes an undesirable entanglement of the fiber bundles and reduces the dispersing quality of the fibers in a gypsum matrix or gypsum slurry.

The size composition may be made by adding the silane coupling agent(s) to deionized water in a container with agitation to hydrolyze the silane coupling agent(s). As described above, weak acids may be added to assist in hydrolyzing the silane coupling agent(s). After the hydrolyzation of the silane coupling agent(s), the primary lubricant, followed by the secondary lubricant, along with any desired additives, are added to form a mixture. If necessary, the pH of the mixture may be adjusted to a desired level. The size composition may be diluted with additional water to achieve a target mix solids.

The size composition may be applied glass filaments formed by conventional techniques such as by drawing molten glass through a heated bushing to form substantially continuous glass fibers. Any type of glass, such as A-type glass, C-type glass, E-type glass, S-type glass, or modifications thereof, is suitable for use as the fiber material. For example, in one modification of E-type glass, the boron oxide is replaced by magnesium oxide. Such a glass is commercially available from Owens Corning Fiberglas Corporation under the trade name Advantex^{®}. In at least one preferred embodiment, the glass fibers are wet use chopped strand glass fibers (WUCS). Wet use chopped strand glass fibers may be formed by conventional processes known in the art. Wet glass fibers are a low cost reinforcement that provide impact resistance, dimensional stability, and improved mechanical properties such as improved strength and stiffness to the finished product. It is desirable that the wet use chopped strand glass fibers have a moisture content from about 2.0 to about 15.0% by weight, and even more desirably a moisture content from about 5.0 to about 10.0% by weight.

The use of other reinforcing fibers such as natural fibers, mineral fibers, carbon fibers, ceramic fibers, and/or synthetic fibers such as polyester, polyamide and/or aramid in the gypsum board is considered to be within the purview of the invention. The term "natural fiber" as used in conjunction with the present invention to refers to plant fibers extracted from any part of a plant, including, but not limited to, the stem, seeds, leaves, roots or bast. However, it is preferred that all of the fibers forming the veil are glass fibers, particularly WUCS fibers, due to their low cost and high tensile strength and modulus. Further, with WUCS, the final product has the mechanical properties to take nails and screws in construction processes without cracking or other mechanical failures. The sized wet use chopped strand glass fibers have an additional advantage of being easily mixed and may be fully dispersed in the gypsum slurry, as discussed in detail below. The presence of synthetic fibers may be advantageous when higher impact resistance is sought. In general, the inclusion of organic fibers is not desirable because these fibers detract from mold resistance, which is a desirable feature in gypsum board applications.

The size composition is preferably applied to the fibers (*e.g*., WUCS fibers) such that the size is present on the fibers in an amount from about 0.05 to about 0.3% by weight based on the total weight of the fibers, and even more preferably in an amount of from about 0.1 to about 0.2% by weight. This can be determined by the loss on ignition (LOI) of the WUCS fibers, which is the reduction in weight experienced by the fibers after heating them to a temperature sufficient to burn or pyrolyze the organic size from the fibers. The size composition may be applied to fibers having a diameter of from about 10-23 microns (0.2-1.0 inches), with fibers of from about 14-18 microns (0.4-0.6 inches) in diameter being more preferred.

The sizing composition may be applied to the fibers in any conventional manner using any conventional application such as by spraying or drawing the fibers to be sized across a rotating or stationary roll wet with the sizing composition. The size composition is preferably applied to the fibers in an amount sufficient to provide the fibers with a moisture content from about 5% by weight to about 10% by weight of the fibers.

In preferred embodiments, glass fibers are sized with the sizing composition and packaged as wet use chopped strand glass that are subsequently used to form a gypsum board. For example, the sized WUCS fibers are deposited into a gypsum slurry used to form a gypsum board. The gypsum slurry may be a conventional gypsum slurry that includes water, gypsum, various accelerants, binders, and water repellency chemicals. Gypsum, also known as calcium sulfate dihydrate (CaSO₄·2 H₂O), is a natural mineral derived from the earth. When calcined, three quarters of the water of crystallization is driven off to produce calcium sulfate hemihydrate (CaSO₄·1/2 H₂O). If the calcination is carried out under pressure, an α- form of gypsum is produced. α-gypsum has regular, needle (acicular), or rod shaped particles. On the other hand, if the calcination is conducted at atmospheric pressure, a β- form of gypsum is produced with porous, irregularly-shaped particles. Although the gypsum in the slurry may be α-gypsum, β-gypsum, or a combination thereof, β-gypsum is more preferred due to its lower cost and increased ability to absorb water as compared to α-gypsum. One advantage of gypsum-based materials in general is that they can be shaped, molded, and processed within a short period of time due to gypsum's naturally occurring rapid setting and hardening characteristics. In addition, the gypsum provides a fire resistance property to the gypsum board.

Additional components may be added to the matrix composition to modify properties of the gypsum board. For example, low density fillers may be added to reduce the cost, the overall density of the gypsum board, and may also be used as an extender. If a denser drywall board is desired, a more dense filler, such as calcium carbonate may be used. In addition, one or more polymeric resins that are at least partially dispersible in water, and most preferably, fully dispersible in water may be included in the gypsum slurry. The polymeric resin provides strength, flexibility, toughness, durability, and water resistance to the final product. Additionally, the presence of at least one coupling agent in the gypsum slurry may also provide added desirable attributes. For example, the presence of a coupling agent helps to bond the polymer resin and filler ( *e.g*., perlite) components of the gypsum slurry. In particular, the addition of a coupling agent to the composition increases the bond strength between perlite, a preferred filler, and the polymer.

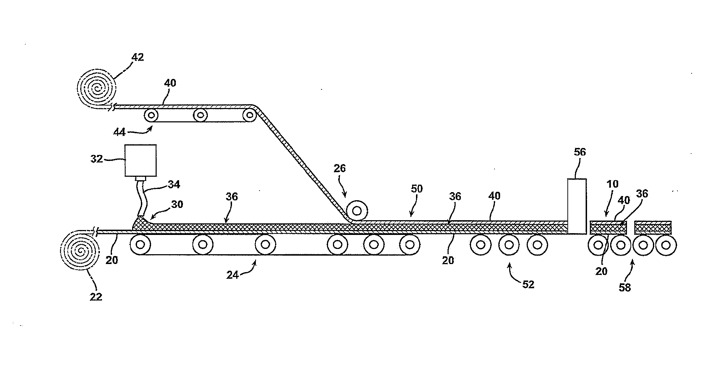

The gypsum slurry containing the sized glass fibers may then be used to form a gypsum board, such as is illustrated in FIG. 1. In at least one exemplary embodiment of the present invention, a first facer material 20 is fed from a supply roll 22 and conveyed by a first conveying apparatus 24 ( *e.g*., a conveyor), to a forming area 26. In preferred embodiments, the first conveying apparatus 24 is a conveyor belt. The first facing layer 20 may be selected from materials that provide desired physical, mechanical and/or aesthetic properties. Examples of materials that may be used as the first facing layer 20 include a glass fiber scrim, a veil or fabric, woven or non-woven materials, and paper or other cellulosic items. Facing layers advantageously contribute flexibility, nail pull resistance, and impact strength to the materials forming the gypsum core of the gypsum board. In addition, the facing layers can provide a fairly durable surface and/or other desirable properties such as a decorative surface to gypsum boards. Preferably, fibrous mats are used as the first facing material 20. The physical characteristics of the gypsum board 10 are at least partially dependent upon the type of fibrous mat chosen as the first and/or second facing layers 20, 40, and it is to be appreciated that not all fibrous mats will provide the same physical characteristics.

A gypsum slurry containing the sized glass fibers 30 is deposited from a gypsum supply 32 via a depositing apparatus such as a hose 34 or a series of hoses (not shown) to the first facing layer 20. The gypsum slurry 30 may be a gypsum slurry such as described above. A second facing material 40 is fed from a supply roll 42 and is simultaneously conveyed to the forming area 26 by a second conveying apparatus 44. The second facing material 40 may the same as, or different from, the first facing material 20. It is preferred, however, that the first and second facing layers 20, 40 are the same as or similar to each other to avoid warpage. At the forming area 26, the second facing material 40 is applied to the gypsum slurry layer 36 in a manner such that the second facing material 40 is placed in contact with the gypsum layer 36. The forming area 26 and the amount of gypsum slurry 30 that is deposited onto the first facing material 20 are sized such that the gypsum slurry 30 gets compressed into both first and second facing materials 20,40. For instance, the fibrous mats forming the first and second facing materials 20,40 mechanically interlock with the gypsum layer 36. As a result, no chemical additives or adhesives are needed to bond the first and second facing layers 20, 40 and the gypsum layer 36 when fibrous mats are used as the facing materials. The resulting product is an intermediate sandwiched gypsum composite 50 formed of a gypsum layer 36 sandwiched between first and second facing layers 20, 40.

The intermediate sandwiched gypsum composite product 50 is preferably initially supported by a conveyor 24 or other similar conveying apparatus. After sufficient green strength is obtained, which arises from the natural reactions of gypsum over time, the conveyor belt 24 ends and a series of rollers 52 conveys the intermediate sandwiched gypsum product 50 to a cutting apparatus 56 (*e.g*., a knife) where the intermediate gypsum product 50 is cut into individual coated gypsum boards 10. The gypsum board 10 is formed of an inner gypsum core 36 mechanically bonded to the first and second facing materials 20,40. Although a conveyer 24 and a series of rollers 52 are depicted as carrying devices for the intermediate sandwiched gypsum composite 50, it is to be appreciated that a series of conveyors or other similar conveying apparatuses known to those of skill in the art could be used to carry the intermediate sandwiched gypsum composite product 50 from the forming area 26 to the cutting apparatus 56.

After the intermediate sandwiched gypsum composite 50 has been cut into discrete gypsum boards 10, the gypsum boards 10 may be subsequently conveyed by a second series of rollers 58 to a drying apparatus (not shown) such as a multi-zone dryer to further dry the gypsum. The distance from the forming area 26 to the cutting apparatus 56 is a distance sufficient to provide a green strength that is strong enough to cut the intermediate sandwiched gypsum product 50 into the gypsum boards 10 without any breakage or warpage of the gypsum boards 10. In practice, the distance may be a distance of 200 or more feet, depending on the line speed.

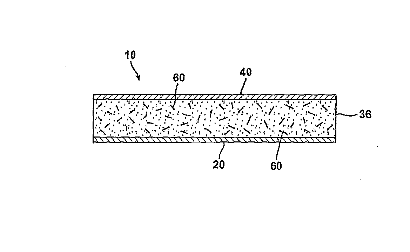

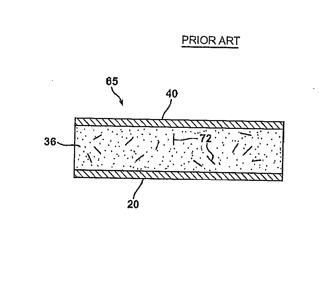

A gypsum board 10 formed according to the present invention is depicted in FIG. 2. As shown in FIG. 2, the sized glass fibers 60 are substantially evenly distributed within the gypsum core 36, unlike the conventional gypsum board 65 depicted in FIG. 3 in which glass fibers not sized with the inventive sizing composition 72 are not substantially evenly distributed in the gypsum core 36. It has been discovered that the size composition present on the glass fibers permits the fibers to substantially evenly disperse in the gypsum slurry. As used herein, the term "substantially evenly disperse" means that the glass fibers are evenly or nearly evenly distributed within the gypsum slurry. An even, or nearly even, distribution of the fibers within the gypsum slurry provides for a more even distribution of fibers and mechanical strength in the gypsum board. In addition, the size composition permits the sized fibers to flow within the gypsum slurry to achieve the substantially even distribution of fibers within the gypsum core of the gypsum board.

There are numerous advantages provided by the inventive sizing composition. For instance, the sizing composition provides improved flowability of the glass fibers in a gypsum slurry with a concurrent reduction in the amount of energy or power required to feed the fibers into the slurry. Additionally, more consistent flow rates of the glass fibers within the gypsum slurry are achieved when the fibers are sized with the inventive sizing composition. Further, it has been determined that fibers sized with the inventive sizing composition have improved dispersion in the gypsum slurry.

Having generally described this invention, a further understanding can be obtained by reference to certain specific examples illustrated below which are provided for purposes of illustration only and are not intended to be all inclusive or limiting unless otherwise specified.

**EXAMPLES**

**Example 1: Sizing Compositions**

The sizing formulations set forth in Table 2 was prepared in a bucket as described generally below. To prepare the size composition, the silane coupling agent(s) and deionized water were added to a container with agitation to hydrolyze the silane coupling agent(s). Acetic acid was added to the mixture to assist in the hydrolyzation of the silane coupling agent(s). After the hydrolyzation of the silane coupling agent(s), the primary lubricant, followed by the secondary lubricant, was added and mixed to form the size composition. The size composition was then diluted with water to achieve the target mix solids from about 1.0 to about 5.0% mix solids. The final composition was then mixed to obtain a homogenous solution.

**Table 2 - Sizing Formulations**

**Table 2**

| **Example** | **1** | **2** | **3** | **4** | **5** | **6** | **7** | **8** |
|---|---|---|---|---|---|---|---|---|
| Lubesize K-12⁽¹⁾ | 15.64 | 15.64 | 15.64 | 15.64 | 15.64 | 78.21 | 78.21 | 78.21 |
| Emery 6760L⁽²⁾ | 78.21 | 0 | 0 | 0 | 0 | 0 | 0 | 0 |
| Silquest A-1100⁽³⁾ | 6.15 | 6.15 | 6.15 | 6.15 | 6.15 | 6.15 | 6.15 | 6.15 |
| GP-2925⁽⁴⁾ | 0 | 78.21 | 78.21 | 0 | 0 | 15.64 | 15.64 | 15.64 |
| Lupamin 9095⁽⁵⁾ | 0 | 0 | 0 | 78.21 | 78.21 | 0 | 0 | 0 |
| | | | | | | | | |
| Primary Lubricant/ Secondary Lubricant Ratio | 0.20 | 0.20 | 0.20 | 0.20 | 0.20 | 5.00 | 5.00 | 5.00 |

(1) primary lubricant and cationic surfactant (Alpha Owens Corning, LLC)

(2) secondary lubricant (Cognis)

(3) α-aminopropyltriethoxysilane (Momentive)

(4) secondary lubricant (Georgia-Pacific Chemicals)

(5) secondary lubricant (BASF Corp.)

The physical properties of fibers sized with the example sizing compositions 1-8 are set forth in Table 3.

**Table 3 - Physical Properties**

**Table 3**

| **Example** | **1** | **2** | **3** | **4** | **5** | **6** | **7** | **8** |
|---|---|---|---|---|---|---|---|---|
| Moisture (%) | 9.7 | 9.0 | 9.0 | 9.4 | 9.3 | 7.7 | 9.1 | 11.3 |
| Strand Solids (%) | 0.319 | 0.234 | 0.175 | 0.294 | 0.252 | 0.194 | 0.146 | 0.387 |
| Length (in) | 0.40 | 0.49 | 0.49 | 0.48 | 0.48 | 0.49 | 0.49 | 0.49 |
| Diameter (micron) | 16.3 | 15.7 | 15.4 | 15.4 | 14.7 | 14.7 | 14.8 | 15.1 |

The size compositions were applied to WUCS in a conventional manner (such as a roll-type applicator as described above). The glass fibers were deposited into a conventional gypsum slurry and the flow rate and flowability were measured. The "flowability" or flowing property of the fibers in the gypsum matrix was measured by feeding the fibers through a Schenck Accurate feeding system at a fixed energy setting. The feeding rate of the fiber through the system was expressed in pounds per minute (Ib/min). The higher the number shown in Table 4, the better the flow rate of the fibers in the gypsum slurry.

The "dispersibility" or dispersing property of the fibers, as shown in Table 4, was measured by dispersing one part of fiber in 10 parts of water and visually examining the ease and uniformity of the fibers being dispersed in the water. A "+" sign shown in Table 4 indicates good fiber dispersion and a "-" sign indicates poor fiber dispersion.

**Table 4 - Application Properties**

**Table 4**

| **Example** | **1** | **2** | **3** | **4** | **5** | **6** | **7** | **8** |
|---|---|---|---|---|---|---|---|---|
| Flow Rate (lb/min) | 0.77 | 1.10 | 0.95 | 0.46 | 0.49 | 3.00 | 9.13 | 5.38 |
| Flowability^{(**)} | - | - | - | - | - | + | + | + |
| Dispersibility | + | - | - | + | - | + | + | + |

** Flowability: "+" is equal to or greater than 3.00 Ibs/min

As shown in Table 4, fibers sized with the inventive sizing composition that have a high primary lubricant to secondary lubricant ratio (*i.e.* Examples 6-8) demonstrated good flowing properties in a gypsum slurry. Additionally, the sized fibers with a high primary lubricant to secondary lubricant ratio demonstrated a good dispersion in water. It has been confirmed that generally, the dispersion of the fibers in water correlates to the dispersion of the fibers in the gypsum slurry.

**Example 2: Reduction of Feeding Rate**

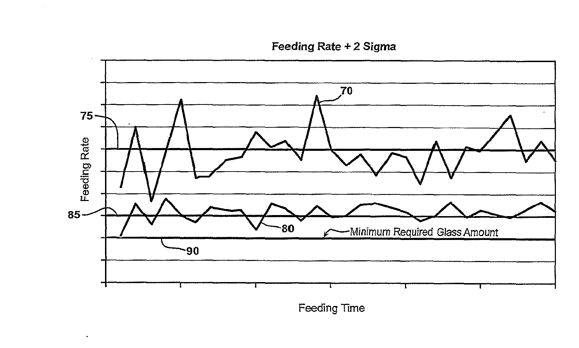

WUCS fibers sized with a conventional sizing composition 70 (*i.e.,* a film forming agent such as a polyvinyl alcohol film forming agent, a coupling agent, and a lubricant) and WUCS fibers sized with the inventive sizing composition 80 were separately fed into a Schenck Accurate feeding system at a fixed energy setting. As shown in FIG. 4, the WUCS fibers sized with the inventive size composition 80 demonstrated a reduction in the feed rate 85 compared to feed rate 75 of the conventional WUCS fibers 70. In addition, the inventive size composition produced a smaller standard of deviation about the feed rate (*i.e.,* there was a tighter control around the mean). As a result, the feed rate can be set at a rate that is closer to the minimum required glass amount for standard gypsum boards 90.

The utilization of the inventive size composition permits the manufacturer to utilize a lower feed rate and still achieve the minimum required glass amount 90. In addition, the WUCS fibers sized with the inventive size composition 80 can be run on a continuous process as shown in FIG. 4 and maintain a constant feed rate. Further, the amount of glass added to the board is advantageously decreased, thereby reducing the amount of wasted glass that needs to be added by conventional WUCS fibers 70 in order to achieve the minimum required glass amount 90.

The invention of this application has been described above both generically and with regard to specific embodiments. Although the invention has been set forth in what is believed to be the preferred embodiments, a wide variety of alternatives known to those of skill in the art can be selected within the generic disclosure. The invention is not otherwise limited, except for the recitation of the claims set forth below.

## Claims

1. A sizing composition for improved fiber feeding, fiber flow, and fiber dispersion in a gypsum matrix comprising:
at least one primary fatty amide lubricant;
a secondary lubricant selected from a polyamide, a polyvinyl amine and combinations thereof; and
one or more silane coupling agent,
wherein said at least one primary fatty amide lubricant and said secondary lubricant are present in said sizing composition in a ratio by dry solids greater
than or equal to 5:1.

2. The sizing composition of claim 1, wherein said at least one primary fatty amide lubricant is a condensation reaction product of a saturated fatty acid having at least 16 carbon atoms and a polyamine.

3. The sizing composition of claim 2, wherein said polyamine is selected from tetraethylenepentamine, diethylenetriamine, tetraethylenetriamine, ethylene diamine, diethylene triamine, triethylene tetramine and pentaethylene hexamine.

4. The sizing composition of claim 1, wherein said polyamide a condensation reaction product of polyamine with a member selected from a fatty acid having 10 or fewer carbons atoms and a diacid.

5. The sizing composition of claim 1, wherein said one or more silane coupling agent is selected from an aminosilane, a diaminosilane and mixtures thereof.

6. The sizing composition of claim 1, further comprising at least one member selected from a weak acid, a viscosity modifier, dyes, oils, fillers, thermal stabilizers, anti-foaming agents, anti-oxidants, dust suppression agents, wetting agents, antimicrobial agents, fungicides and biocides.

7. The sizing composition of claim 1, wherein:
said at least one primary amide lubricant is present in said sizing composition in an amount from about 50 to about 90% by weight of the dry solids,
said secondary lubricant is present in said sizing composition in an amount from about 10 to about 50% by weight of the dry solids,
said one or more silane coupling agent is present in said sizing composition in an amount from about 10 to about 20% by weight of the dry solids

8. A sized reinforcement fiber for a gypsum slurry comprising:
a reinforcement fiber at least partially coated with a sizing composition including:
at least one primary fatty amide lubricant;
a secondary lubricant selected from a polyamide, a polyvinyl amine and mixtures thereof; and
one or more silane coupling agent,
wherein said at least one primary fatty amide lubricant and said secondary lubricant are present in said sizing composition in a ratio by dry solids greater than or equal to 5:1.

9. The sized reinforcement of claim 8, wherein said at least one primary fatty amide lubricant is a condensation reaction product of a saturated fatty acid having at least 16 carbon atoms and a first polyamine.

10. The sizing composition of claim 9, wherein said polyamide a condensation reaction product of a member selected from a fatty acid having 10 or fewer carbons atoms and a diacid with a second polyamine.

11. The sizing composition of claim 10, wherein said first and second polyamine is selected from tetraethylenepentamine, diethylenetriamine, tetraethylenetriamine, ethylene diamine, diethylene triamine, triethylene tetramine and pentaethylene hexamine.

12. The sizing composition of claim 8, wherein said polyamide a condensation reaction product of a member selected from a fatty acid having 10 or fewer carbons atoms and a diacid with a polyamine.

13. The sizing composition of claim 12, wherein said one or more silane coupling agent is selected from an aminosilane, a diaminosilane and mixtures thereof.

14. The sizing composition of claim 8, further comprising at least one member selected from a weak acid, a viscosity modifier, dyes, oils, fillers, thermal stabilizers, anti-foaming agents, anti-oxidants, dust suppression agents, wetting agents, antimicrobial agents, fungicides and biocides.

15. A gypsum board comprising:
a gypsum core having first and second major surfaces and first and second minor surfaces, said gypsum core having therein a plurality of reinforcement fibers at least partially coated with a sizing composition including at least one primary fatty amide lubricant;
one or more secondary lubricant selected from a polyamide and a polyvinyl amine; and
at least one silane coupling agent,
wherein said primary fatty amide lubricant and said secondary lubricant are present in said sizing composition in a ratio by dry solids greater than or equal to 5:1;
a first facing layer applied to said first major surface of said gypsum core; and a second facing layer applied to said second major surface of said gypsum core.

16. The gypsum board of claim 15, wherein said at least one primary fatty amide lubricant is a condensation reaction product of a saturated fatty acid having at least 16 carbon atoms and a polyamine.

17. The gypsum board of claim 16, wherein said polyamine is selected from tetraethylenepentamine, diethylenetriamine, tetraethylenetriamine, ethylene diamine, diethylene triamine, triethylene tetramine and pentaethylene hexamine.

18. The gypsum board of claim 15, wherein said polyamide a condensation reaction product polyamine with a member selected from a fatty acid having 10 or fewer carbons atoms and a diacid.

19. The gypsum board of claim 15, wherein said plurality of reinforcement fibers are substantially evenly distributed throughout said gypsum core.

20. The gypsum board of claim 19, wherein said plurality of reinforcement fibers are wet use chopped strand glass fibers having a moisture content of from about 5% by weight to about 10% by weight.

## Amended claims

### Amended claims in accordance with Rule 137(2) EPC.

**1.** A sizing composition for improved fiber feeding, fiber flow, and fiber dispersion in a gypsum matrix comprising:
at least one primary fatty amide lubricant;
a secondary lubricant selected from a polyamide, a polyvinyl amine and combinations thereof; and
one or more silane coupling agent,
wherein said at least one primary fatty amide lubricant and said secondary lubricant are present in said sizing composition in a ratio by dry solids greater than or equal to 5:1.

**2.** The sizing composition of claim 1, wherein said at least one primary fatty amide lubricant is a condensation reaction product of a saturated fatty acid having at least 16 carbon atoms and a first polyamine.

**3.** The sizing composition of claim 1, wherein said polyamide is a condensation reaction product of a second polyamine with a member selected from a fatty acid having 10 or fewer carbons atoms and a diacid.

**4.** The sizing composition of claim 2, wherein said first and second polyamine are selected from tetraethylenepentamine, diethylenetriamine, tetraethylenetriamine, ethylene diamine, diethylene triamine, triethylene tetramine and pentaethylene hexamine.

**5.** The sizing composition of claim 1, wherein said one or more silane coupling agent is selected from an aminosilane, a diaminosilane and mixtures thereof.

**6.** The sizing composition of claim 1, further comprising at least one member selected from a weak acid, a viscosity modifier, dyes, oils, fillers, thermal stabilizers, anti-foaming agents, anti-oxidants, dust suppression agents, wetting agents, antimicrobial agents, fungicides and biocides.

**7.** The sizing composition of claim 1, wherein:
said at least one primary amide lubricant is present in said sizing composition in an amount from 50 to 90% by weight of the dry solids,
said secondary lubricant is present in said sizing composition in an amount from 10 to 50% by weight of the dry solids,
said one or more silane coupling agent is present in said sizing composition in an amount from 10 to 20% by weight of the dry solids

**8.** A sized reinforcement fiber for a gypsum slurry comprising:
a reinforcement fiber at least partially coated with a sizing composition according to any one of claims 1-7.

**9.** A gypsum board comprising:
a gypsum core having first and second major surfaces and first and second minor surfaces, said gypsum core having therein a plurality of reinforcement fibers at least partially coated with a sizing composition according to any one of claims 1-7;
a first facing layer applied to said first major surface of said gypsum core; and
a second facing layer applied to said second major surface of said gypsum core.

**10.** The gypsum board of claim 9, wherein said plurality of reinforcement fibers are substantially evenly distributed throughout said gypsum core.

**11.** The gypsum board of claim 10, wherein said plurality of reinforcement fibers are wet use chopped strand glass fibers having a moisture content of from 5% by weight to 10% by weight.
